# EUROPEAN PATENT APPLICATION

(11) **EP 1 528 513 A1**
(43) Date of publication of application: **04.05.2005**
(21) Application number: 04256430.2
(22) Date of filing: 19.10.2004
(51) Int. Cl.: G07F 7/08

(54) **Electronic money charger**

(30) Priority: 22.10.2003 JP 2003361590
(71) Applicant: Sanden Corporation, Isesaki-shi, Gunma 372-8502 (JP)
(72) Inventor: Takahashi, Katsumi c/o Sanden Corporation, Isesaki-shi Gunma 372-8502 (JP)
(74) Representative: Haley, Stephen

(57) **Abstract**

The present invention includes magnetic card reader (21) for cash card (1) and reader-writer unit (30) for contactless IC card (2). The present invention withdraws an amount of money input by a user from a banking institution's balance account corresponding to cash card (1) as well as increase a balance of IC card (2) by the amount of money.

## Description

The present invention relates to an electronic money charger for charging an Integrated Circuit (IC) chip that serves as an electronic wallet storing electronic money with electronic money.

Electronic money systems, which use an IC card integrated with an IC chip as an electronic wallet, have become popular in the world. In such an electronic money system, an IC card stores a value of electronic money to enable a commercial transaction within the balance of the electronic money.

In order to operate such,an electronic money system, a method of charging an IC card, which serves as an electronic wallet, with electronic money is needed. The following two methods are conventional ways of charging an IC card with electronic money.

The first method is for charging a card with electronic money by cash. Japanese Patent Publication No. 2003-36466 discloses this method. In this method, a charger provided with a reader-writer for an IC card and a cash identification device such as bill identification device is used. The charger increases a balance account of an IC card by the amount of cash put into the cash identification device. The charger is also connectable via a network to a computer administrating electronic money and sends charge data to the administrating computer at a time of charging a card or at a certain time period. An administrator of the electronic money collects cash accumulated in the charger.

The second method is for charging a card with electronic money through a network. In this method, a user's computer is provided with a reader-writer for an IC card. The user connects his computer to a certain server administrating the electronic money through a common network such as the Internet. Then, the user sends his credit card number and an amount of money to charge the card from his computer to the server administrating the electronic money. When the credit card number is authenticated at the server administrating the electronic money, the user's computer increases the balance of the user's IC card by the charged amount. The server administrating the electronic money pays a credit card company with the received credit card number and the charged amount.

The first method is inconvenient for a user, however, in that it needs cash for charging a card with electronic money, though the electronic money system best features cashlessness. Another problem of the first method is a high production cost needed to produce highly robust charger, because the charger deals with cash. Yet another problem of the first method is a high administrative cost because it needs cash collection.

The second method has a problem of requiring high level of security because credit card numbers go around a common network such as the Internet. Such a problem of security makes users nervous, which probably prevents such a system from becoming popular.

It is an object of the present invention to provide a highly secured electronic money charger to enable a card to be charged with electronic money without using cash.

In order to achieve the above object, the present invention is characterized by an electronic money charger for charging an IC chip that serves as an electronic wallet with electronic money, comprising:
a contactless interface for reading/writing data from/to an IC chip contactlessly;
a first communication device for connecting with a host computer of a banking institution;
a card reader for reading data on a banking institution's card;
an input device for inputting an amount of money to be dealt with and a password; and
a controller for subtracting an amount of money to be dealt with from a user's balance account through the first communication device as well as for adding the amount of money to be dealt with to a balance of electronic money on the IC chip through the contactless interface based on data read by the card reader and an amount of money to be dealt with and password input through the input device.

According to the present invention, when a user inserts a banking institution's card into a card reader, inputs his password and an amount of money to be dealt with, and places an IC chip in coverage of contactless interface, the amount of money to be dealt with is subtracted from a user's balance account and added to a balance of electronic money on an IC chip.

The present invention improves convenience to a user, since a user can charge an IC chip with an amount of money from the user's account of a banking institution using a banking institution's card without using cash. As the present invention does not have to deal with cash, it does not need to be highly robust as conventional art does. This reduces production cost. As an administrator of electronic money does not need to collect cash, an administrative cost is also reduced.

If said controller performs subtraction of an amount from a user's balance account and addition of the amount to a balance of electronic money as a single transaction, a conflict between a balance account and a balance of electronic money can preferably be eliminated. It is particularly preferable to provide an output means for printing out transaction information when subtraction an amount from a balance account fails. This is because, as the present invention uses a contactless IC chip for a storage medium of electronic money, it cannot guarantee to resume a communication with an IC chip after failing subtraction of an amount from a balance account.

Objectives, configurations, and effects of the present invention other than those mentioned above will become apparent from the description detailed later.
Fig. 1 is a block diagram of an electronic money charger;
Fig. 2 is a flowchart for ATM main controller; and
Fig. 3 is a sequence chart for a charging process in an electronic money charger.

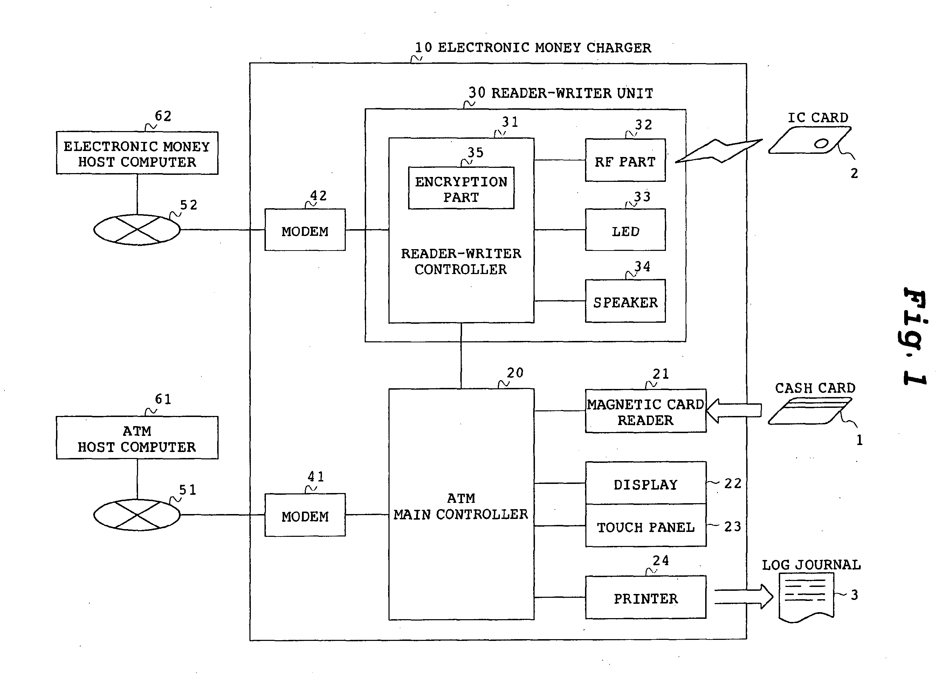

An embodiment of the present invention will be described with reference to drawings. Fig. 1 is a block diagram illustrating a circuitry of an electronic money charger.

Electronic money charger 1 is a device to charge IC card 2 serving as an electronic wallet with electronic money from a balance account corresponding to cash card 1.

Cash card 1 is issued from a banking institution with a record of data including an account number and a personal identification number. Cash card 1 can be in various forms such as a magnetic card and IC card. In this embodiment, cash card 1 is a magnetic card.

IC card 2 is embedded with an IC chip serving as an electronic wallet. A main operation part, a storage part, a communication controlling part, an antenna etc. are integrated on the IC chip. The IC chip, driven by radio power supplied from outside, can contactlessly send/receive data from/to an outside device. IC card 2 saves identification information and a value of electronic money.

Electronic money charger 10 includes ATM (Automated Teller Machine) main controller 20, magnetic card reader 21 for cash card 1, display 22 for providing a user with various pieces of information, touch panel 23 attached to display 22 as an input means for a user to input information, printer 24 for outputting log-journal 3 described later, reader-writer unit 30 for IC card 2, and two modems 41 and 42, as shown in Fig. 1.

ATM main controller 20 can communicate with a banking institution's host computer (hereinafter referred to as ATM host computer) 61 via modem 41 and network 51. Generally, a dedicated line is used for network 51 in consideration of security. A dedicated protocol (All Banks protocol) is used for a communication between ATM main controller 20 and ATM host computer 61.

ATM main controller 20 causes display 22 to show a charge button on it during a standby state. When ATM main controller 20 detects a user's touch on a place corresponding to the charge button on touch panel 23, it starts a charging process. This charging process will be described later.

Reader-writer unit 30 includes reader-writer controller 31, RF part 32, which consists of a substrate implementing an antenna, RF circuit and the like, LED 33 and speaker 34 which are means for displaying and outputting an operation status or the like.

Reader-writer controller 31 can communicate with a host computer of an administrator of electronic money (hereinafter referred to as electronic money host computer) 62 via modem 42 and network 52. Data communicated among reader-writer controller 31, electronic money host computer 62, and IC card 2 is encrypted by encryption part 35. When reader-writer controller 31 updates electronic money on IC card 2, it stores the update data and sends the update data to electronic money host computer 62 via modem 42. The update data can be sent at each time the electronic money updated or at predetermined time intervals (for example, once a day).

In order to make reader-writer unit 30 communicate with IC card 2, a user must place IC card 2 within a predetermined range from RF part 32. In other words, reader-writer unit 30 can not always communicate with IC card 2. It can only communicate with IC card 2 when a user places IC card 2 near to RF part 32.

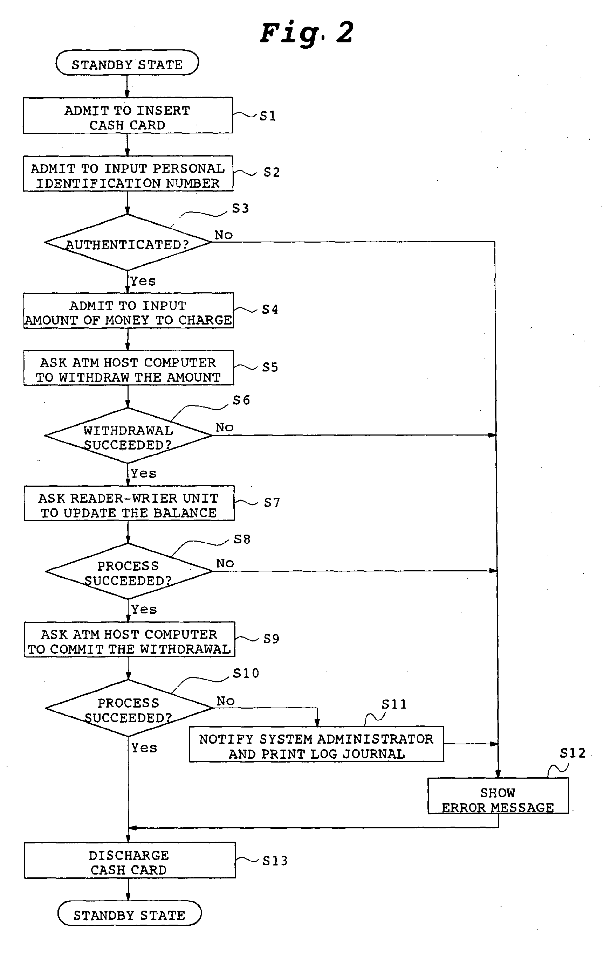

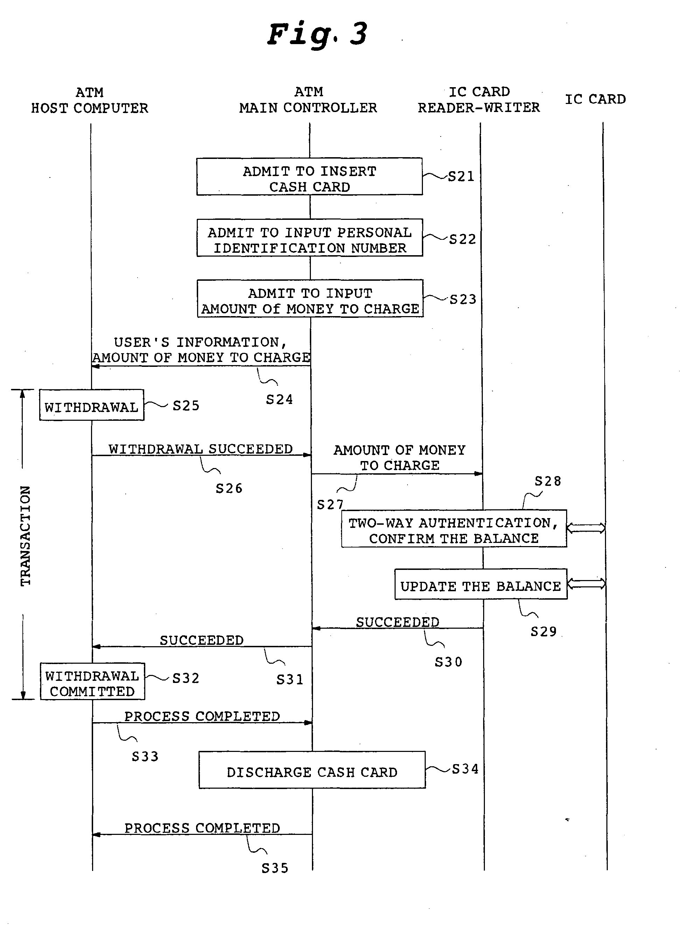

Now, a charging process performed by electronic money charger 10 will be described with reference to Figs. 2 and 3. Fig. 2 is a flowchart for ATM main controller, and Fig. 3 is a sequence chart of a charging process completed successfully.

ATM main controller 20 exits a standby state and enters a charging process when it detects a user's touch on a charge button, as described above. ATM main controller 20 first admits the user to insert cash card 1 by making magnetic card reader 21 acceptable to cash card 1 (step S1 in Fig. 2 and step S21 in Fig. 3). Although not shown in drawings, ATM main controller 20 goes back to a standby state, if cash card 1 is not inserted in a certain period from the admittance of insertion.

When cash card 1 is inserted in ATM magnetic card reader 21, ATM main controller 20 admits the user to input a personal identification number (step S2 in Fig. 2 and step S22 in Fig. 3). Specifically, ATM main controller 20 shows a prompt for the user to input a personal identification number along with ten-keys for the user to input the personal identification number on display 22. When ATM main controller 20 detects a user's touch on a place displaying the ten-keys over touch panel 23, it accepts the sequence of numbers corresponding to respective keys as a personal identification number. Although not shown in drawings, ATM main controller 20 discharges cash card 1 and goes back to a standby state, if a personal identification number is not input in a certain period from the admittance of the input.

When a personal identification number is input, ATM main controller 20 reads various pieces of information including a personal identification number from cash card 1 with magnetic card reader 21. Then ATM main controller 20 performs verification by comparing the personal identification number read form cash card and the personal identification number input by a user (step S3 in Fig. 2). If the verification fails, ATM main controller 20 shows such a message as "not authenticated" on display 22 (step S12 in Fig. 2), discharges cash card 1 (step S13 in Fig. 2), and goes back to a standby state. For simplicity of description, ATM main controller 20 goes back immediately to a standby state when the verification fails for the first time in this embodiment. Actually, ATM main controller 20 goes back to a standby state when the verification fails for a certain time (for example, three times) after allowing the user to retry the input (not shown).

If the verification succeeds, ATM main controller 20 admits the user to input an amount of money to transfer from a balance account of his banking institution to IC card 2, i.e., an amount of money to charge IC card 2 (step S4 in Fig. 2 and step S23 in Fig. 3). Specifically, ATM main controller 20 shows a prompt for the user to input an amount of money to charge IC card 2 along with ten-keys to input the amount of money on display 22. When ATM main controller 20 detects a user's touch on a place displaying the ten-keys on touch panel 23, it accepts the sequence of numbers corresponding to respective keys as the amount of money to charge IC card 20.

When the amount of money is input, ATM main controller 20 connects to ATM host computer 61, asks ATM host computer 61 to withdraw the amount of money from the balance account (step S5 in Fig. 2), and confirms that the withdrawal succeeded (step S6 in Fig. 2). Specifically, as shown in Fig. 3, ATM main controller 20 notifies ATM host computer 61 of user's information including an account number read from cash card 1 and the amount of money to charge IC card 2, which is the amount of money withdrawn from the balance account (step S24 in Fig. 3). When ATM host computer 61 receives the user's information from ATM main controller 20, it performs the same process as that of a usual cash withdrawal. In other words, ATM host computer 61 starts the transaction, confirms that the balance account is more than the amount of money to be withdrawn on the basis of the received information, and subtract the amount of money from the balance account (step S25 in Fig. 3). Then, it notifies ATM main controller 20 that the process succeeded (step S26 in Fig. 3). This subtraction is confirmed at the time of commitment (step S32 in Fig. 3) described later. If the balance account is lower than the amount of money to be withdrawn, ATM host computer 61 rolls back the transaction and notifies ATM main controller 20 that the process fails.

When ATM host computer 61 fails to perform the withdrawal, ATM main controller 20 shows an error message on display 22 (step S12 in Fig. 2). Then ATM main controller 20 discharges cash card 1 (step S13 in Fig. 2) and goes back to a standby state (step S6 in Fig. 2).

When ATM host computer 61 succeeded in the withdrawal, ATM main controller 20 asks reader-writer unit 30 to increase the balance of electronic money of IC card 2 by the amount of money to charge IC card 2 (step S7 in Fig. 2), and confirms the result received from reader-wrier unit 30 (step S8 in Fig. 2). Specifically, ATM main controller 20 sends a request including the amount of money to charge IC card 20 to reader-writer unit 30 as shown in Fig. 3 (step S27 in Fig. 3). Reader-writer unit'30 starts communication with IC card 2, performs two-way authentication at first, then reads the balance of electronic money on IC card 2 (step S28 in Fig. 3). Then reader-writer unit 30 confirms that the balance of electronic money after the charge (= current balance + the amount of money to charge) is not over the upper limit for the card, updates IC card 2 to increase the balance of electronic money by the amount of money to charge (step S29 in Fig. 3). Then reader-writer unit 30 returns the result of the process to ATM main controller 20 (step S30 in Fig. 3).

If updating of the balance of IC card 2 fails, ATM main controller 20 goes back to a standby state (step S8 in Fig. 2). For simplicity of description, ATM main controller 20 goes back immediately to a standby state when the updating of the balance fails in this embodiment. Actually, ATM main controller 20 shows an error message (step 12 in Fig. 2), discharges cash card 1 (step S13 in Fig. 2) and then goes back to a standby state when it retries the updating of the balance of IC card 2 and the process fails for a certain time (for example, three times).

If the updating of the balance of IC card 2 succeeds, ATM main controller 20 asks ATM host computer 61 to commit the withdrawal performed at step S10 (step S9 in Fig. 2) and confirms the result of the process received from ATM host computer 61 (step S10 in Fig. 2). Specifically, ATM main controller 20 notifies ATM host computer 61 of the completion of the updating of IC card 2 (step S31 in Fig. 3) as shown in Fig. 3. When ATM host computer 61 receives the notification, it makes a transaction relating to the withdrawal committed (step S32 in Fig. 3) and notifies ATM main controller 20 of the result of the process (step S33 in Fig. 3).

If the commitment of the withdrawal succeeded, ATM main controller 20 discharges cash card 1 (step S13 in Fig. 2 and step S34 in Fig. 3), notifies ATM host computer 61 of the completion of the process (step S35 in Fig. 3), and goes back to a standby state. If the commitment of the withdrawal aborts, ATM main controller 20 notifies a predetermined system administrator of the abort and prints log journal 3 telling that the process aborted with printer 24 (step S10, S11 in Fig. 2). Then ATM main controller 20 shows an error message such as "hand this slip to a teller" on display 11 (step S12), discharges cash card 1 (step S13), and goes back to a standby state.

If authentication of a personal identification number fails, if a withdrawal fails due to insufficient funds, or if updating of IC card 2 fails, the process securely terminates without affecting a balance account of a banking institution according to a manner described above. If IC card 2 is updated and the commitment of the withdrawal from the balance account fails, the balance of IC card 2 should restore the state prior to the charging process. However, as mentioned above, the user usually takes IC card 2 away from RF part 32 of reader-writer unit 30 so that the balance of IC card 2 is unable to restore the previous state. There can be another approach of prompting the user to place IC card near RF part 32 for restoring the balance, but this lacks reliability. In such case, electronic money charger 10 of the embodiment prints out log journal 3 and leaves the matter of resolving the contradiction between the balance account of a banking institution and the balance of IC card 2 to a predetermined administrator.

Electronic money charger 10 of the embodiment is convenient as a user can charge IC card with electronic money from the balance account of a banking institution by using cash card 1 without using cash. Electronic money charger 10 does not need to accumulate cash in it. This eliminates the need for improving robustness of the charger so that the production cost can be reduced. It also eliminates cash collection, so that the administration cost can also be reduced.

An embodiment of the present invention has been described in detail, but the present invention is not limited to this embodiment. Although the above embodiment is described to deal with no cash, the charger can be adapted to deposit/withdraw money by cash in/from the balance account of a banking institution or balance of electronic money of IC card 2, if needed, for example. The above embodiment only accepts cash card 1 for a user to deal with the balance account of a banking institution, but it can be adapted to accept a passbook as well.

Furthermore, an IC chip serving as an electronic wallet is embedded in a card other than a banking institution's card in the above embodiment, but an IC chip can be embedded in a banking institution's card to enable the card to serve both as a banking institution's card and a card for electronic money.

Moreover, an IC card embedded with a contactless IC chip serving as an electronic wallet is used in the above embodiment, but the present invention can be implemented by appliances embedded with the IC chip. Examples of appliances to be embedded with the IC chip include a cellular phone, a watch, a ring, a bracelet, and a tag.

## Claims

1. An electronic money charger comprising:
a contactless interface (30) for reading/writing data from/to an IC chip (2) serving as an electronic wallet contactlessly;
a first communication device (41) for connecting with a host computer of a banking institution (61);
a card reader (21) for reading data on a banking institution's card (1);
an input device (23) for inputting an amount of money to be dealt with and a password; and
a controller (20) for subtracting an amount of money to be dealt with from a user's balance account through the first communication device (42) as well as for adding the amount of money to be dealt with to a balance of electronic money on the IC chip (2) through the contactless interface (30) based on data read by the card reader (21) and an amount of money to be dealt with and password input through the input device (23).

2. The electronic money charger according to claim 1, comprising a second communication device (42) connecting with administrating computer (62) administrating electronic money, wherein said controller (20) sends information regarding the addition to electronic money to the administrating computer (62) through the second communication device (42).

3. The electronic money charger according to any one of claim 1 or 2, wherein said controller (20) performs subtraction from a user's balance account and addition to a balance of electronic money as a single transaction.

4. The electronic money charger according to claim 3, comprising output means (24) for printing out information on failure when the subtraction from a balance account failed.
